# NEUE EUROPÄISCHE PATENTSCHRIFT

(11) **EP 2 100 692 B2**
(45) Veröffentlichungstag und Bekanntmachung des Hinweises auf die Entscheidung über den Einspruch: **11.04.2018**
(45) Hinweis auf die Patenterteilung: 15.06.2011
(21) Anmeldenummer: 08004575.0
(22) Anmeldetag: 12.03.2008
(51) Int. Cl.: B23Q 1/00, B23Q 1/01

(54) **Verfahren zur Herstellung einer Bearbeitungsvorrichtung mit Grundkörper aus Beton**
Method for manufacturing a processing device with body made of concrete
Procédé pour fabriquer une machine d'usinage avec corps en béton

(43) Veröffentlichungstag der Anmeldung: 16.09.2009
(60) Teilanmeldung: 11156388.8
(73) Patentinhaber: Homag Holzbearbeitungssysteme AG, 72296 Schopfloch (DE)
(72) Erfinder: Gringel, Martin, 72479 Straßberg (DE)
(74) Vertreter: Hoffmann Eitle

(56) Entgegenhaltungen:
- EP-A- 0 194 173
- EP-A- 0 253 930
- DE-A1- 2 256 029
- DE-A1- 2 521 036
- DE-A1- 3 734 895
- DE-A1- 19 745 233
- DE-A1-102004 006 757
- GB-A- 1 556 941
- GB-A- 2 071 635
- JP-A- 57 194 845
- US-A- 3 800 636
- US-A- 4 468 160

## Beschreibung

### Technisches Gebiet

Die Erfindung betrifft ein Verfahren zum Herstellen einer Bearbeitungsvorrichtung zum Bearbeiten von Werkstücken, die bevorzugt zumindest teilweise aus Holz, Holzwerkstoffen, Kunststoff oder dergleichen bestehen, nach dem Oberbegriff von Anspruch 1.

### Stand der Technik

Bearbeitungsvorrichtungen werden bei der Bearbeitung und Herstellung von Werkstücken in der Möbel- und Bauelementeindustrie und anderen Industriezweigen verbreitet eingesetzt. Diese Maschinen können beispielsweise zum spanenden Bearbeiten, Beschichten, Kantenanleimen oder vielfältige andere Veredelungsvorgänge der Werkstücke genutzt werden. Die Bearbeitungseinheiten dieser Maschinen sind üblicherweise an einem Maschinenbett aufgebaut, das traditionell aus Stahl bzw. Stahlblech hergestellt wird.

Die zunehmenden Bearbeitungsgeschwindigkeiten und hiermit verbundenen dynamischen Kräfte der Bearbeitungsmaschinen führen dazu, dass das Schwingungsverhalten des die Bauteile der Maschine tragenden Maschinenbetts kontinuierlich an Bedeutung gewinnt. Vor diesem Hintergrund wurde vorgeschlagen, das Maschinenbett aus Mineralguss (auch Polymerbeton genannt) herzustellen, d.h. einem Gemisch aus einem synthetischen Bindemittel und Zuschlagstoffen (vgl. beispielsweise DE 10 2005 736 A1).

Allerdings hat sich gezeigt, dass derartiger Mineralguss zwar eine hohe Zug- und Druckfestigkeit besitzt, jedoch aufwändig und vergleichsweise teuer herzustellen ist.

Eine Bearbeitungsvorrichtung ist aus der GB 2 071 635 A bekannt. Ferner offenbart die DE-A-3734895 eine Innenrundschleifmaschine mit einem Maschinengestell, das aus Faserbeton derart hergestellt ist, um vollständig auf schlaffe oder vorgespannte Bewehrung zu verzichten.

### Darstellung der Erfindung

Es ist daher Aufgabe der vorliegenden Erfindung, ein Verfahren zum Herstellen einer Bearbeitungsvorrichtung bereitzustellen, deren Maschinenbett für dynamische Beanspruchungen geeignet ist und sich gleichzeitig einfach und kostengünstig herstellen lässt.

Diese Aufgabe wird erfindungsgemäß durch ein Verfahren nach Anspruch 1 gelöst. Besonders bevorzugte Weiterbildungen der Erfindung sind in den abhängigen Ansprüchen angegeben.

Das erfindungsgemäße Verfahren zeichnet sich dadurch aus, dass der Grundkörper durch einen Basisabschnitt aus Faserbeton, und einen separaten Anschlussabschnitt hergestellt wird. Dabei wird der Anschlussabschnitt in einer Referenzposition in Bezug auf den Basisabschnitt ausgerichtet und mit dem Basisabschnitt verklebt. Hierdurch lassen sich auf besonders einfache Weise die nachfolgend beschriebenen Vorteile eines Baukastensystems erzielen, wobei im Fall einer Verklebung die Klebefuge vorteilhaft einen Toleranzausgleich ermöglicht.

Gemäß einer Weiterbildung des erfindungsgemäßen Verfahrens ist vorgesehen, dass der mindestens eine Anschlussabschnitt mittels einer Ausrichtstation ausgerichtet und zur Verbindung mit dem Basisabschnitt bereitgehalten wird. Hierdurch lässt sich eine besonders hohe Abmessungsgenauigkeit des fertiggestellten Grundkörpers erreichen, wobei die Ausrichtstation besonders bi einer Verklebung der einzelnen Bauteile vorteilhaft ist, um dem Kleber ausreichend Zeit zum Aushärten zu geben.

Ferner ist gemäß einer Weiterbildung der Erfindung vorgesehen, dass beim Verbinden der Basisabschnitt auf dem mindestens einen, ausgerichteten Anschlussabschnitt zu bewegt wird. Dies ermöglicht eine besonders präzise Ausrichtung des jeweiligen Anschlussabschnitts und eine leichte und fehlerfreie Vorbereitung (z.B. Beleimung) des Anschlussabschnitts.

Der Erfindung liegt der Gedanke zugrunde, auf für den Bereich des Maschinenbaus völlig neuartige Materialien zurückzugreifen. Vor diesem Hintergrund ist erfindungsgemäß vorgesehen, dass bei einer gemäß dem erfindungsgemäßen Verfahren hergestellter Bearbeitungsvorrichtung der Grundkörper und/oder zumindest ein Teil der Bearbeitungseinheit (oder alternativ auch andere geeignete Bauteile der Bearbeitungsvorrichtung) zumindest abschnittsweise aus zementgebundenem Faserbeton besteht. So haben die Erfinder erkannt, dass sich die gewünschten dynamischen Eigenschaften der Bearbeitungsmaschine überraschenderweise auch mit diesem bisher nur im Baubereich eingesetzten Werkstoff erzielen lassen. Auf diese Weise kann im Bereich von Bearbeitungsmaschinen erstmals ein Werkstoff zum Einsatz kommen, der leicht und kostengünstig verfügbar und darüber hinaus mit geringem Aufwand verarbeitbar ist. Darüber hinaus besitzt Beton eine hohe Dauerhaftigkeit.

Unter Beton wird im Rahmen der vorliegenden Erfindung ein zementgebundener Beton verstanden, der beispielsweise nach DIN 1045 hergestellt ist. Dabei kann es sich um normalfesten, hochfesten oder auch ultrahochfesten Beton mit einer Druckfestigkeit von bis zu 200 MPa oder mehr handeln. In diesen Fällen wird der Beton verschiedene, teils synthetische Zusatzstoffe aufweisen, wobei als Bindemittel weiterhin in erster Linie Zement zum Einsatz kommt. Ferner ist der Beton im Rahmen der vorliegenden Erfindung ein Beton mit vorgespannten Bewehrungselementen, die beispielsweise aus Stahl, aber auch aus anderen Materialien wie Faserverbundwerkstoffen oder dergleichen bestehen können.

Dabei kann erfindungsgemäß einerseits der Grundkörper der Bearbeitungsvorrichtung, andererseits aber auch zumindest ein Teil der Bearbeitungseinheit der Bearbeitungsvorrichtung aus Beton bestehen. In beiden Fällen besticht der Beton durch seine hohe Steifigkeit und sein hohes Eigengewicht, sodass er sich hervorragend dazu eignet, als Basis und Führung für bewegte Maschinenteile zu dienen. So kann beispielsweise der Grundkörper der Bearbeitungsvorrichtung dazu dienen, als Führung für einen dynamisch bewegten Ausleger oder ein dynamisch bewegtes Portal zu dienen. Alternativ oder zusätzlich kann beispielsweise auch ein Ausleger bzw. ein Portal als Teilebearbeitungseinheit dazu dienen, eine oder mehrere Spindeleinheiten oder sonstige Bearbeitungsaggregate für deren dynamische Bewegung zu führen. In beiden Fällen ergeben sich dank der Herstellung der Bauteile aus Beton geringe Verformungen, sodass eine sehr hohe Dynamik bzw. eine sehr präzise Bearbeitung ermöglicht wird.

Gemäß der Erfindung ist der Beton Faserbeton. Unter Faserbeton wird im Rahmen der vorliegenden Erfindung ein zementgebundener Beton verstanden, dem bei der Herstellung eine Vielzahl von Fasern beigemischt worden ist, die aus unterschiedlichsten Materialien bestehen können und die unterschiedlichste Materialien (z.B. Stahl, Kunststoff, Faserverbundwerkstoffe, etc.) und Längen (z.B. mehrere Millimeter bis mehrere Zentimeter) aufweisen können. Dabei kann die Herstellung des Faserbetons beispielsweise nach der Baunorm DIN 1045 erfolgen. Auf diese Weise kann einerseits die Festigkeit des Betons erhöht und dessen Rissempfindlichkeit vermindert werden, sodass sowohl die statischen und dynamischen Eigenschaften als auch die Dauerhaftigkeit verbessert werden können.

Darüber hinaus ist gemäß der Erfindung vorgesehen, dass der Grundkörper mindestens ein Stahlprofil aufweist. Ein derartiges Stahlprofil kann im Rahmen der Erfindung eine Mehrfachfunktion erfüllen, indem es als Führung, Aufstandsfläche, Krafteinleitungsbereich sowie Biegezugelement für den jeweiligen Grundkörper dienen kann. Dabei ist es besonders bevorzugt, dass das Stahlprofil einbetoniert ist, um eine schlupffreie und dauerhafte Kraftübertragung zwischen Stahlprofil und Beton des Grundkörpers sicherzustellen.

Gemäß der Erfindung ist ferner vorgesehen, dass der Grundkörper mehrteilig derart ausgebildet ist, dass er einen Basisabschnitt, der im Wesentlichen aus zementgebundenem Faserbeton besteht, und mindestens einen hiermit nachträglich verbundenen Anschlussabschnitt aufweist. Hierdurch lässt sich der Grundkörper auf einfache Weise herstellen, da kein komplexer Einzelkörper mit entsprechend komplexer Schalung hergestellt werden muss. Vielmehr wird es möglich, Einzelteile mit vergleichsweise einfacher Geometrie vorzubereiten und anschließend zu einem komplexen Körper zusammenzusetzen.

Dabei können die einzelnen Bauteile nach Art eines Baukastensystems vorgefertigt und dann entsprechend den jeweiligen Anforderungen zu einem gewünschten Grundkörper zusammengesetzt werden. Hierdurch ergeben sich eine vereinfachte Planung und eine hohe Flexibilität des Produktionsprozesses, wobei die Produktion mit einfachen Mitteln, insbesondere einfachen Schalungen mit konstanter Geometrie ausgeführt werden kann.

Darüber hinaus ermöglicht die erfindungsgemäß mehrteilige Ausgestaltung des Grundkörpers, den Einfluss zeitabhängiger Verformungen des Betons (z.B. durch Schwinden) zu minimieren bzw. zu berücksichtigen, beispielsweise indem die Einzelteile zunächst für eine bestimmte Zeitdauer gelagert werden und erst nach Abschluss eines Großteils der zeitabhängigen Verformungen präzise miteinander verbunden werden.

Der mindestens eine Anschlussabschnitt des Grundkörpers kann im Rahmen der vorliegenden Erfindung aus unterschiedlichsten Materialien hergestellt sein, wobei es sich im Hinblick auf die oben genannten Vorteile als zielführend erwiesen hat, dass mindestens ein Anschlussabschnitt durch ein Betonbauteil gebildet ist.

Alternativ oder zusätzlich ist gemäß einer Weiterbildung der Erfindung jedoch vorgesehen, dass mindestens ein Anschlussabschnitt durch ein Metallelement wie beispielsweise ein Metallprofil gebildet ist. Hierdurch lässt sich ein Anschlussabschnitt mit noch höherer Abmessungspräzision und Festigkeit vorsehen, ohne dass hierfür eine besondere Nachbearbeitung erforderlich wäre. Vor diesem Hintergrund ist es besonders bevorzugt, dass das mindestens eine Metallelement als Führungselement bzw. Führungsprofil ausgebildet ist, um beispielsweise einen verfahrbaren Ausleger oder sonstige bewegliche Vorrichtungsteile zu führen. Ferner ermöglicht das Vorsehen eines Anschlussabschnitts aus Stahl, dass mögliche zeitabhängige Verformungen des Betons (beispielsweise durch Schwinden) zumindest lokal eliminiert werden können, falls dies beispielsweise zur Erzielung einer hohen Abmessungs- oder Lagegenauigkeit erforderlich ist.

Im Rahmen dieses Konzepts eines mehrteiligen Grundkörpers ist gemäß einer Weiterbildung der Erfindung vorgesehen, dass die Teile des Grundkörpers miteinander verklebt und/oder verzahnt (d.h. in zumindest einer Richtung formschlüssig miteinander verbunden) sind. Hierdurch ergibt sich nicht nur eine deutlich vereinfachte Herstellung und hohe Stabilität des mehrteiligen Grundkörpers, sondern es kann durch das Vorsehen einer Klebefuge auch ein Ausgleich von Abmessungstoleranzen erreicht werden, die bei Betonbauteilen auftreten können.

Gemäß der Erfindung ist ferner vorgesehen, dass der Grundkörper mindestens einen, bevorzugt mindestens zwei Anschlussabschnitte derart aufweist, dass der Grundkörper einen Querschnitt aufweist, der beispielsweise ausgewählt ist aus L-förmig, U-förmig oder dreiecksförmig.

Eine Ausgestaltung des Grundkörpers mit mindestens einem schenkelartig ausgebildeten Anschlussabschnitt ermöglicht, dass der Grundkörper eine einfache Konstruktion besitzt, jedoch vielseitig verwendbar ist. So kann der Grundkörper in einer ersten Drehposition (z.B. Anschlussabschnitt bzw. Schenkel nach oben) vorteilhaft für Konsolenmaschinen verwendet werden, und kann in einer anderen Drehposition (z.B. Anschlussabschnitt bzw. Schenkel nach unten) für Tischmaschinen verwendet werden. Dies gilt insbesondere, wenn der Grundkörper einen U-förmigen oder dreiecksförmigen Querschnitt aufweist, da hier die Anzahl erforderlicher Zusatzbauteile vermindert und die Steifigkeit des Grundkörpers erhöht ist.

Darüber hinaus ist es im Rahmen der Erfindung vorteilhaft möglich, dass die Bearbeitungseinheit eine balkenförmige Führungseinrichtung, insbesondere einen Ausleger oder ein Portal aufweist, die zumindest abschnittsweise aus Beton besteht, wie bereits obenstehend erläutert wurde. Dabei ist es besonders bevorzugt, dass die Führungseinrichtung mindestens ein Stahlprofil umfasst, das beispielsweise in dem Beton einbetoniert sein kann. Das Vorsehen des Stahlprofils kann dazu beitragen, die Festigkeit der Führungseinrichtung zu optimieren und darüber hinaus verbesserte Lastangriffspunkte zu schaffen, da ein Stahlprofil verbesserte Möglichkeiten zum Anschrauben, Anschweißen oder sonstigen Anbringen von Aggregaten oder dergleichen bietet. Ferner trägt das Stahlprofil dazu bei, zeitabhängige Verformungen des Betons zu minimieren und eine Führungseinrichtung mit hoher Abmessungsgenauigkeit vorzusehen.

### Kurze Beschreibung der Zeichnungen

- Fig. 1: zeigt schematisch eine Perspektivansicht einer Bearbeitungsvorrichtung, hergestellt gemäß der vorliegenden Erfindung;
- Fig. 2: veranschaulicht schematisch ein erfindungsgemäßes Verfahren zum Herstellen der in Fig. 1 gezeigten Bearbeitungsvorrichtung;
- Fig. 3: veranschaulicht schematisch das in Fig. 2 gezeigte Verfahren zum Herstellen der in Fig. 1 gezeigten Bearbeitungsvorrichtung;
- Fig. 4: zeigt schematisch eine Perspektivansicht einer Bearbeitungsvorrichtung, die nicht gemäß der vorliegenden Erfindung hergestellt ist;
- Fig. 5: zeigt schematisch eine Perspektivansicht der in Fig. 4 gezeigten Bearbeitungsvorrichtungen.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

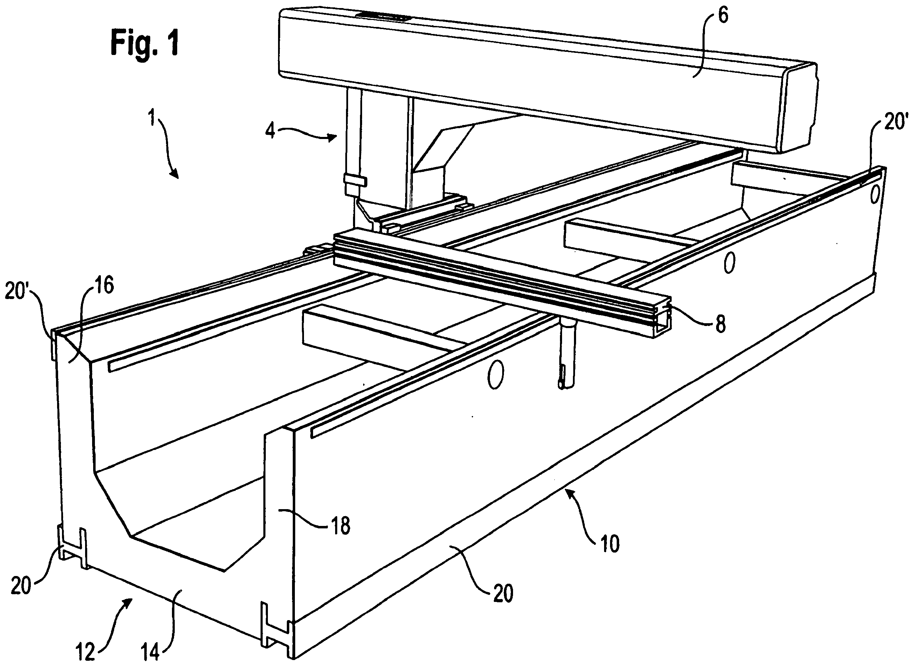

Eine Bearbeitungsvorrichtung 1 ist in Fig. 1 schematisch in einer Perspektivansicht dargestellt. Bei der gezeigten Bearbeitungsvorrichtung 1 handelt es sich in der vorliegenden Ausführungsform um ein CNC-Bearbeitungszentrum, obgleich die vorliegende Erfindung nicht hierauf beschränkt ist und auch andersartige Stationär- oder Durchlaufmaschinen erfindungsgemäß ausgestaltet werden können.

Die Bearbeitungsvorrichtung 1 dient in der vorliegenden Ausführungsform zum Bearbeiten von Werkstücken (in Fig. 1 nicht gezeigt), die beispielsweise aus Holz, Holzwerkstoffen, Kunststoff oder dergleichen bestehen, wie sie im Bereich der Möbel- und Bauelementeindustrie häufig zum Einsatz kommen. Zu diesem Zweck weist die Bearbeitungsvorrichtung 1 eine Bearbeitungseinheit 4 auf, die in der vorliegenden Ausführungsform durch einen Fahrständer bzw. Ausleger 6 und eine oder mehrere daran vorgesehene Bearbeitungsaggregate (nicht gezeigt) gebildet ist. Dabei kann der Ausleger 6 beispielsweise aus Stahl hergestellt sein, aber auch Beton, insbesondere Faserbeton aufweisen, in den ggf. ein Stahlprofil eingebettet ist.

Der Fahrständer 4 ist entlang eines Maschinenbetts 10 verfahrbar, das untenstehend eingehender beschrieben wird. Auf dem Maschinenbett sind mehrere Konsolen 8 (von denen in Fig. 1 nur eine gezeigt ist) angeordnet, um die zu bearbeitenden Werkstücke (nicht gezeigt) zu stützen und zu halten, beispielsweise mittels Vakuum- und/oder anderer Spanner. Dabei können die Konsolen 8 in bekannter Weise entlang des Maschinenbetts 10 verstellbar sein.

Das Maschinenbett 10 weist einen Grundkörper 12 auf, der in der vorliegenden Ausführungsform überwiegend aus Faserbeton hergestellt ist, wie er eingangs unter Bezugnahme auf DIN 1045 definiert wurde.

Die Geometrie des Grundkörpers 12 ist in der vorliegenden Ausführungsform im Wesentlichen u-förmig ausgestaltet, sodass der Grundkörper 12 einen flächigen Basisabschnitt 14 und zwei winklig hierzu vorgesehene Schenkel 16, 18 aufweist. Der Winkel zwischen dem Basisabschnitt und den Schenkeln kann vielfältig variiert werden, sodass durch eine entsprechende Neigung beispielsweise des Schenkels 18 auch ein dreiecksförmiger Querschnitt oder vielfältige andere Querschnitte hergestellt werden können.

Der Grundkörper 12 weist in der vorliegenden Ausführungsform zwei Stahlprofile 20 auf, die in den Beton des Grundkörpers 12 einbetoniert sind. Zu diesem Zweck können die Stahlprofile 20 mit geeigneten Verankerungsmitteln wie Kopfbolzen, Schlaufen oder dergleichen versehen sein. Dabei sind die Stahlprofile 20, wie in Fig. 1 zu erkennen ist, derart angeordnet, dass sie als Aufstandsfläche für den Grundkörper 12 dienen Darüber hinaus verleihen die Stahlprofile 20 dem Grundkörper 12 zusätzliche Stabilität und Risssicherheit.

Ferner weist der Grundkörper 12 in der vorliegenden Ausführungsform zwei weitere Stahlprofile 20' auf, die als Anschlussabschnitte an den Schenkeln 16 bzw. 18 angebracht sind. Die Stahlprofile 20' sind im Bereich des freien Endes des Schenkels 16 bzw. 18 jeweils derart angeordnet, dass sie als Führung für die Verfahrbewegung eines Fahrständers 6 oder anderer beweglicher Teile dienen können. Um die hierfür erforderliche, präzise Positionierung der Stahlprofile 20' sicherzustellen, sind diese in der vorliegenden Ausführungsform an den Schenkeln 16 bzw. 18 angeklebt.

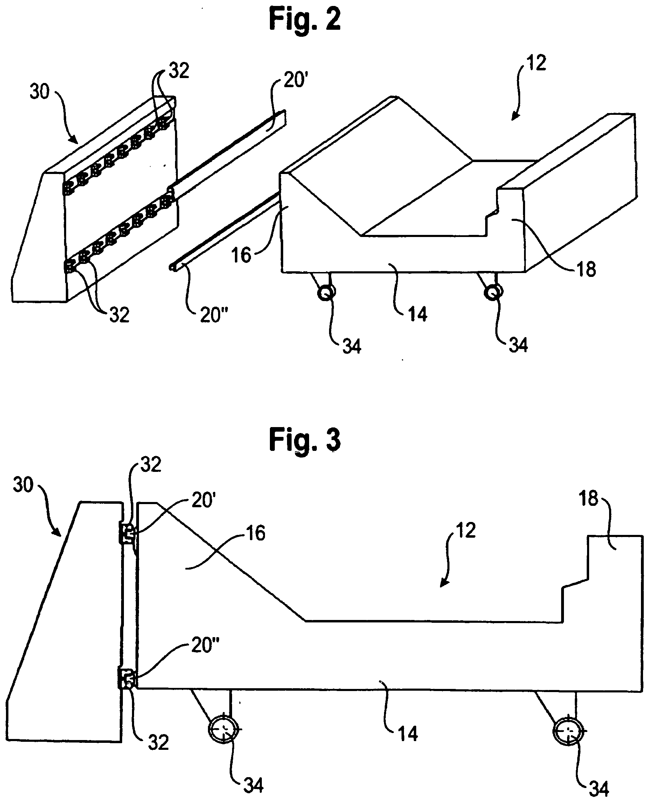

Eine bevorzugte Ausführungsform des erfindungsgemäßen Verfahrens zum Herstellen des oben beschriebenen Grundkörpers 12 wird nachfolgend unter Bezugnahme auf Fig. 2 und 3 beschrieben. Zunächst wird der Basisabschnitt 14 mit seinen Schenkel- bzw. Anschlussabschnitten 16 und 18 aus Faserbeton hergestellt. Ferner wird das Stahlprofil 20' sowie ein weiteres Stahlprofil 20", das beispielsweise als zusätzliche Führung dienen kann, vorbereitet und mittels einer Ausrichtstation 30 in einer Referenzposition ausgerichtet. Zu diesem Zweck weist die Ausrichtstation 30 eine Mehrzahl von Greifelementen 32 auf, mittels derer die Stahlprofile 20', 20" in einer Referenzposition lösbar bereitgehalten werden können. Dabei bezieht sich die Referenzposition beispielsweise auf die gewünschte Position und den gewünschten Verfahrweg des Fahrständers 4.

Anschließend werden die Stahlprofile 20', 20" auf der dem Basisabschnitt 14 zugewandten Seite mit einem geeigneten Klebestoff bestrichen, um nun den Basisabschnitt 14 mit den Schenkeln 16, 18 auf die Stahlprofil 20', 20" zu zubewegen (z. B. mittels der in Fig. 2 und 3 gezeigten Rollen 34) und zu verpressen. Auf diese Weise werden die Stahlprofile 20', 20" sicher und in einer genau definierten Position mit den Betonteilen 14, 16, 18 verbunden.

Sobald der Klebstoff ausgehärtet ist, können die Stahlprofile 20', 20" von der Ausrichtstation 30 gelöst werden, sodass die Ausrichtstation 30 nun für den nächsten Klebevorgang bereitsteht.

Obgleich in den Figuren nicht gezeigt, können zusätzlich zu der Klebeverbindung auch andere Verbindungsmittel zum Einsatz kommen, wie beispielsweise Schrauben, Bolzen oder dergleichen.

Obgleich in Fig. 1 bis 3 ebenfalls nicht gezeigt, kann der Grundkörper 12 auch mehrteilig ausgestaltet sein, indem beispielsweise die Schenkel 16 und/oder 18 nachträglich mit dem Basisabschnitt 14 verbunden werden. In diesem Falle werden zur Herstellung des Grundkörpers 12 zunächst die einzelnen Grundkörperabschnitte 14, 16 und 18 in den entsprechenden Schalungen hergestellt, wobei es sich bei den Schalungen bevorzugt um wiederverwendbare Schalungen mit einer hochfesten Schalhaut aus beispielsweise Stahl oder dergleichen handelt. Dabei können, wie bei der in Fig. 1 gezeigten Ausführungsform, bereits die Stahlprofile 20 in den Basisabschnitt 14 einbetoniert werden, obgleich auch diese nachträglich an den jeweiligen Bauteilen angebracht, insbesondere angeklebt werden können.

Anschließend werden die Verbindungsflächen für den späteren Verbindungsvorgang vorbereitet und mit einer Klebeschicht versehen, um nun die Bauteile 14, 16 und 18 miteinander zu verbinden. Für eine präzise und sichere Verbindung der einzelnen Bauteile kann ebenfalls eine Ausrichtstation zum Einsatz kommen, wie sie oben unter Bezugnahme auf Fig. 2 und 3 beschrieben wurde. Die einzelnen Bauteile können so in einer gewünschten Referenzposition gehalten werden, wobei die Kleberschicht dann als Toleranzausgleich dient. Auf diese Weise lässt sich ein Grundkörper mit hoch präzisen Abmessungen herstellen, der sich sonst nur mit Stahlbaulösungen realisieren lässt.

Anschließend werden die Bauteile 14, 16 und 18 gegebenenfalls noch miteinander verschraubt oder auf andere Weise kraftschlüssig verbunden, obgleich dies nicht unbedingt erforderlich ist.

Obgleich in den Figuren ebenfalls nicht gezeigt, kann der erfindungsgemäß hergestellte Grundkörper 12 auch "auf dem Kopf" stehend angeordnet werden, um eine Tischmaschine zu ergeben. Der Grundkörper 12 ist daher sehr vielfältig und flexibel einsetzbar, sodass mit einer einzigen Schalung bzw. einem einzigen Satz von Schalungen unterschiedlichste Maschinen hergestellt werden können.

Ferner ist es im Rahmen der vorliegenden Ausführungsform ebenso möglich, den Grundkörper 12 in einer anderen Ausrichtung aufzustellen, beispielsweise mit dem Basisabschnitt 14 nach unten und den Schenkeln 22 vertikal ausgerichtet. In diesem Fall kann an den freien Enden der Schenkel 22 eine geeignete Führung für einen Fahrständer oder auch jede andere Art von Maschinenaufbau angebracht werden. Ferner kann es sinnvoll sein, auch bei dieser Ausführungsform den Basisabschnitt 14 zumindest teilweise hohl bzw. mit Ausnehmungen auszuführen, um ein optimales Verhältnis zwischen Gewicht, Steifigkeit und Schwingungsverhalten zu erzielen.

Bei dem Maschinenbett, das zumindest abschnittsweise aus Beton besteht, kann es sich auch um ein nachträglich durch Beton verlängertes Maschinenbett handeln (z. B. durch Kleben, Schrauben, etc).

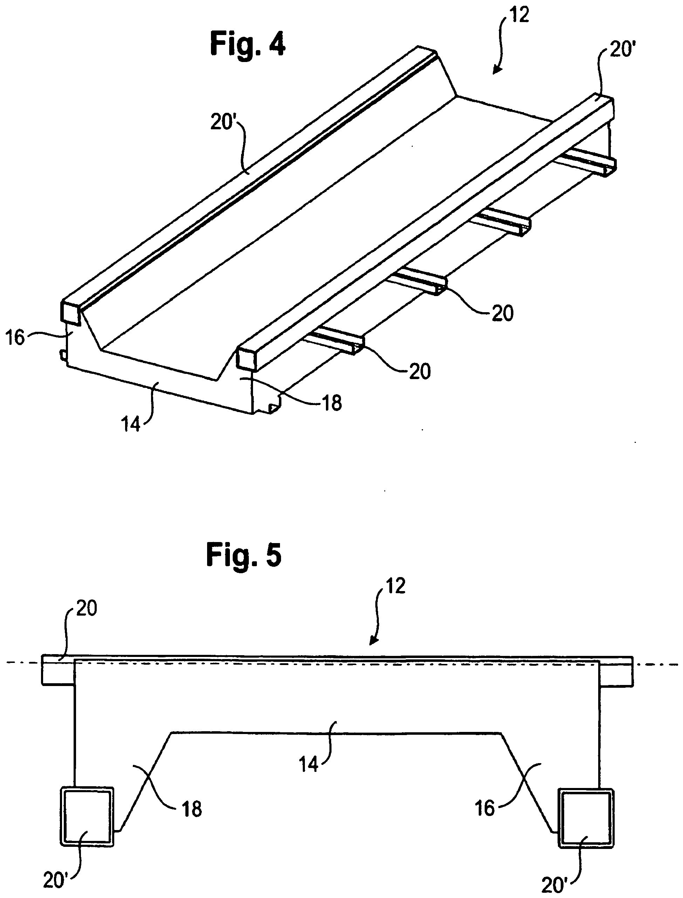

Eine zweite Bearbeitungsvorrichtung ist in Figuren 4 und 5 schematisch in Perspektivansichten gezeigt, wobei sich diese Figuren auf die Ausgestaltung des Grundkörpers 12 konzentrieren. Der in Fig. 4 und 5 gezeigte Grundkörper 12 zeichnet sich dadurch aus, dass er "in einem Guss" hergestellt ist. So sind nicht nur der Basisabschnitt 14 und die Schenkel 16, 18 einstückig aus Faserbeton hergestellt, sondern auch die Stahlprofile 20, 20' sind unmittelbar in dem Basisabschnitt 14 bzw. die Schenkel 16, 18 einbetoniert. Zu diesem Zweck sind die Stahlprofile 20 als U-Profile mit Verankerungsmitteln wie Kopfbolzen (nicht gezeigt) oder dergleichen ausgebildet, um einen unmittelbaren Verbund zu erzielen. Demgegenüber sind die Profile (Anschlussabschnitte) 20' als rechteckige Hohlkastenprofile ausgebildet. Um bei diesem Hohlkastenprofilen ein Eindringen des Betons in das Innere des Hohlprofils und einen entsprechenden Verbund mit dem Beton zu ermöglichen, weisen die Stahlprofile 20' radiale Durchgangsöffnungen (nicht gezeigt) auf. Dabei zeigt Fig. 5 den Grundkörper 12 in seiner Position, die er während des Gießens des Betons in die Schalung einnimmt. Demgegenüber zeigt Fig. 4 eine mögliche Position des Grundkörpers 12 als Maschinenbett. Es ist jedoch zu beachten, dass der Grundkörper 12 auch in der in Fig. 5 gezeigten Stellung als Maschinenbett verwendet werden kann, wobei sich diese Stellung primär für sogenannte Tischmaschinen anbietet.

Für alle Ausführungsformen ist zu beachten, dass der Grundkörper 12 auch mit vielfältigen Durchgangsöffnungen, Leitungen, Ankerstellen, etc versehen werden kann, um die Funktionalität des Grundkörpers 12 weiter zu optimieren, beispielsweise hinsichtlich Gewicht, Steifigkeit, Materialverbrauch, Führung von Daten-, Druckluft- oder sonstigen Leitungen, Anbringen von Maschinenteilen etc.

## Patentansprüche

1. Verfahren zum Herstellen (12) einer Bearbeitungsvorrichtung (1) zum Bearbeiten von Werkstücken, die bevorzugt zumindest teilweise aus Holz, Holzwerkstoffen, Kunststoff oder dergleichen bestehen, mit:
einem Maschinenbett (10) und mindestens einer mit dem Maschinenbett verbundenen Bearbeitungseinheit (4), wobei das Maschinenbett (10) einen Grundkörper (12) aufweist, der zumindest abschnittsweise aus zementgebundenem Faserbeton besteht, **dadurch gekennzeichnet, dass** der Grundkörper (12) mindestens ein einbetoniertes Stahlprofil (20) aufweist, dass
der Grundkörper (12) und/oder zumindest ein Teil der Bearbeitungseinheit (4) zumindest abschnittsweise aus Faserbeton mit vorgespannten Bewehrungselementen besteht,
und dass der Grundkörper (12) mehrteilig derart ausgeführt ist, dass er einen Basisabschnitt (14), der im Wesentlichen aus zementgebundenem Faserbeton besteht, und mindestens einen hiermit nachträglich verbundenen Anschlussabschnitt (20') aufweist, mit den Schritten:
Herstellen eines Basisabschnitts (14) aus Faserbeton, Vorbereiten mindestens eines mit dem Basisabschnitt zu verbindenden Anschlussabschnitts (16, 18; 20'), Ausrichten des mindestens einen Anschlussabschnitts (16, 18; 20') in einer Referenzposition,
Verkleben des mindestens einen Anschlussabschnitts (16, 18; 20') mit dem Basisabschnitt (14).

2. Verfahren nach Anspruch 1, **dadurch gekennzeichnet,**
**dass** der mindestens eine Anschlussabschnitt (16, 18; 20') mittels einer Ausrichtstation (30) ausgerichtet und zur Verbindung mit dem Basisabschnitt (14) bereitgehalten wird.

3. Verfahren nach Anspruch 1 oder 2, **dadurch**
**gekennzeichnet, dass** mindestens ein Anschlussabschnitt durch ein Betonbauteil (16, 18) gebildet ist.

4. Verfahren nach Anspruch 3, **dadurch gekennzeichnet, dass** mindestens ein Anschlussabschnitt durch ein Metallelement (20'), insbesondere ein Führungselement gebildet ist.

5. Verfahren nach einem der Ansprüche 1 bis 4, **dadurch gekennzeichnet, dass** die Teile des Grundkörpers (12) miteinander verklebt und/oder verzahnt sind.

6. Verfahren nach einem der vorhergehenden Ansprüche, **dadurch gekennzeichnet, dass** der Grundkörper (12) mindestens einen, bevorzugt mindestens zwei Anschlussabschnitte (16,18) derart aufweist, dass der Grundkörper einen Querschnitt aufweist, der beispielsweise ausgewählt ist aus L-förmig, U-förmig oder dreiecksförmig.

## Claims

1. Method for producing (12) a machining apparatus (1) for machining workpieces which are preferably at least partially made of wood, derived timber products, plastic or the like, having:
a machine bed (10) and at least one machining unit (4) connected to the machine bed,
wherein the machine bed (10) has a main body (12) which in at least one section is made of cement-bonded fibre-reinforced concrete, **characterised in that** the main body (12) has at least one concrete-embedded steel profile (20),
**in that** the main body (12) and/or at least a part of the machining unit (4) in at least one section is made of fibre-reinforced concrete with prestressed reinforcing elements,
and **in that** the main body (12) is constructed in several parts such that it has a base section (14), which is substantially made of cement-bonded fibre-reinforced concrete, and at least one connecting section (20') subsequently connected thereto, with the steps of:
manufacturing a base section (14) from fibre-reinforced concrete,
preparing at least one connecting section (16, 18; 20') to be connected to the base section, aligning the at least one connecting section (16, 18; 20') in a reference position, adhering the at least one connecting section (16, 18; 20') to the base section (14).

2. Method according to claim 1, **characterised in that** the at least one connecting section (16, 18; 20') is aligned by means of an aligning station (30) and is kept ready for connection to the base section (14).

3. Method according to claim 1 or 2, **characterised in that** at least one connecting section is formed by a concrete component (16, 18).

4. Method according to claim 3, **characterised in that** at least one connecting section is formed by a metallic element (20'), in particular a guide element.

5. Method according to any of claims 1 to 4, **characterised in that** the parts of the main body (12) are adhered and/or dovetailed together.

6. Method according to any of the preceding claims, **characterised in that** the main body (12) has at least one, preferably at least two, connecting sections (16, 18), such that the main body has a cross-section which is for example selected from L-shaped, U-shaped or triangular.

## Revendications

1. Procédé de fabrication (12) d'un dispositif d'usinage (1) pour l'usinage de pièces à travailler, composées de préférence au moins partiellement de bois, matériaux ligneux, matière synthétique ou analogue,
avec :
un banc de machine (10) et au moins une unité d'usinage (4), reliée au banc de machine,
le banc de machine (10) présentant un corps de base (12), composé, au moins par tronçons, de béton de fibres lié par du ciment, **caractérisé en ce que** le corps de base (12) présente au moins un profilé en acier intégré dans le béton (20), **en ce que**
le corps de base (12) et/ou au moins une partie de l'unité d'usinage (4) est/sont composé(s), au moins par tronçons, de béton de fibres, avec des éléments d'armature précontraints,
et **en ce que** le corps de base (12) est réalisé en plusieurs parties, de manière qu'il présente un tronçon de base (14), composé essentiellement de béton de fibres lié par du ciment, et au moins un tronçon de raccordement (20') lui étant relié subséquemment, avec les étapes consistant à :
fabriquer un tronçon de base (14) en béton de fibres,
préparer au moins un tronçon de raccordement (16, 18 ; 20') à relier au tronçon de base,
orienter au moins un tronçon de raccordement (16, 18 ; 20') dans une position de référence,
coller au moins un tronçon de raccordement (16, 18 ; 20') au tronçon de base (14).

2. Procédé selon la revendication 1, **caractérisé en ce que**,
au moins un tronçon de raccordement (16, 18 ; 20') est orienté au moyen d'un poste d'orientation (30) et est tenu prêt pour la liaison au tronçon de base (14).

3. Procédé selon la revendication 1 ou 2, **caractérisé en ce que**,
au moins un tronçon de raccordement est formé par un élément de construction en béton (16, 18).

4. Procédé selon la revendication 3, **caractérisé en ce qu'**au moins un tronçon de raccordement est formé par un élément métallique (20'), en particulier un élément de guidage.

5. Procédé selon l'une des revendications 1 à 4, **caractérisé en ce que** les parties du corps de base (12) sont collées ensemble et/ou imbriquées les unes avec les autres.

6. Procédé selon l'une quelconque des revendications précédentes, **caractérisé en ce que** le corps de base (12) présente au moins un, de préférence au moins deux tronçons de raccordement (16, 18), de manière que le corps de base présente une section transversale sélectionnée par exemple parmi une forme en L, une forme en U ou une forme de triangle.
